# EUROPEAN PATENT SPECIFICATION

(11) **EP 0 894 614 B1**
(45) Date of publication and mention of the grant of the patent: **29.05.2002**
(21) Application number: 97830401.2
(22) Date of filing: 31.07.1997
(51) Int. Cl.: B29D 30/08, B29D 30/10

(54) **A method for making a tyre for vehicle wheels**
Verfahren zur Herstellung eines Luftreifens für Fahrzeugräder
Procédé pour la fabrication d'un bandage pneumatique pour roue de véhicule

(43) Date of publication of application: 03.02.1999
(73) Proprietor: PIRELLI PNEUMATICI SOCIETA' PER AZIONI, 20126 Milano (IT)
(72) Inventor: Caretta, Renato, Gallarate (Varese) (IT)
(74) Representative: Righetti, Giuseppe

(56) References cited:
- EP-A- 0 715 947
- FR-A- 2 348 066
- GB-A- 2 118 492
- NL-A- 7 016 947
- US-A- 2 915 102
- US-A- 3 245 853
- US-A- 3 375 150
- US-A- 3 606 921
- US-A- 4 049 767
- US-A- 5 115 852

## Description

The present invention relates to a method of making a tyre for vehicle wheels, comprising the steps of: forming an air tube of toroidal conformation, having a transverse profile in the form of a closed ring; covering the air tube with a carcass structure accomplishment of which involves winding of at least one first thread-like element round the transverse profile of the air tube so as to form first turns disposed consecutively in side by side relationship along the circumferential extension of the air tube to define a first carcass ply integrally covering the air tube; associating a circumferentially inextensible belt structure and a tread band circumferentially external to the belt structure, with the carcass structure at a radially outer position.

In accordance with the invention, this method leads to achievement of a tyre for vehicle wheels, of the type comprising: an air tube or inflatable core of toroidal conformation, having a transverse profile in the form of a closed ring; a carcass structure comprising at least one first carcass ply formed of at least one first threadlike element wound round the transverse profile of the air tube to form first turns disposed consecutively in side by side relationship along the circumferential extension of the air tube; a pair of annular elements for anchoring to a rim, axially spaced apart from each other and extending circumferentially on the air tube surfaces at a radially inner position; a belt structure circumscribing the carcass structure at a radially outer position relative to the rotation axis of the tyre; a tread band disposed circumferentially at a radially outer position relative to the belt structure. Still in accordance with the invention said tyre can be coupled with one said rim of the type comprising a central portion for engagement with a hub of a vehicle wheel, and engagement means for said tyre; the invention further relates to a wheel consisting of said tyre and rim assembly.

It is known that tyres for vehicle wheels currently have a toroidal conformation the profile of which seen in cross-section is open on its circumferential inner side. In more detail, the tyre profile seen in cross-section is delimited between two inner circumferential edges defined by corresponding beads axially spaced apart from each other. An inextensible annular element, usually referred to as bead core, is integrated into each bead and an elastomer filling usually obtained by extrusion is to be circumferentially applied to the outer surface of said bead core.

Turned up around the cross-sectional profile of the bead core are the flaps of one or more carcass plies. Each carcass ply is made up of a plurality of textile cords disposed parallelly in side by side relationship and incorporated in an elastomer layer produced with the aid of appropriate calenders fed from an extrusion die. The rubberized fabric obtained from this step is then transversely cut into pieces of the desired length that are subsequently joined together at the respective side edges, optionally by slight mutual overlapping, in order to make a rubberized ply having transversely-disposed textile cords.

The assembly formed of one or more of said carcass plies and the bead cores with the respective elastomer filling form the so-called carcass structure of a tyre.

Applied to the carcass structure, at circumferentially outer position, is a circumferentially inextensible belt structure, comprising one or more superposed strips of rubberized fabric formed of textile and/or metallic cords. Circumferentially superposed on the belt structure is tread band obtained by extrusion, by means of which the tyre gets into contact with the ground.

Beads are such structured and shaped that they interact with respective circumferential portions of a rim with which the tyre is associated, to ensure a steady connection between these two components of a wheel.

In more detail, coupling between the bead and the corresponding circumferential portion of the rim enables the bead to be constantly pushed against an abutment shoulder by effect of the tyre inflation pressure. In tubeless tyres, that is tyres devoid of an air tube, coupling between the bead and the corresponding circumferential rim portion is conceived in such a manner that a hermetic seal of the air contained in the tyre is also ensured.

In any case, both in tubeless tyres and in tyres providing employment of an air tube, the task of counteracting the inner inflating pressure of the tyre relies on the rim.

In addition to the above described tyres having a transverse profile of open section, use of which is almost universally spread for all types of road vehicles, several types of tyre of a transverse sectional profile in the form of a closed ring have been proposed. For example, US Patent 4,232,723 discloses a tyre having an air tube and a carcass structure essentially comprising a ribbon-like ply reinforced with radial threads which extends in the circumferential extension of the tyre and is wound by its end flaps round the air tube so as to cover it over the whole transverse sectional profile thereof. A belt structure is interposed between the carcass ply and the air tube, at a circumferentially outer position relative to the air tube; said belt structure has a substantially flat profile in cross-section and is essentially formed of one or more strips extending circumferentially of the tyre and turned up around two inextensible annular elements located at the region usually referred to as tyre shoulder.

Coupling between the tyre and rim is obtained by a circumferential ridge of one piece construction with the elastomer material forming the tyre sidewalls, and extending at a radially internal and centred position relative to the tyre.

Another type of tyre having a closed cross-sectional profile is disclosed in US Patent 4,283,366, herein reported as an example of the most relevant state of the art in connection with the present invention.

This tyre comprises an air tube having a substantially oval sectional profile, a pair of bead cores axially spaced apart from each other and located directly in contact with the air tube, on the side thereof turned towards the tyre axis. The assembly formed of the air tube and bead cores is enclosed in a carcass structure essentially formed of a cord spirally-wound about the cross-sectional profile of the air tube. The cord thus wound forms a plurality of turns disposed consecutively in side by side relationship along the circumferential tyre extension, and oriented in respective planes substantially radial to the rotation axis of the tyre itself.

Applied to the air tube at a radially outer position thereof is a belt comprising one or more circumferentially-inextensible belt strips, on which the tread band is superposed.

During the carcass structure formation, as well as during the following steps of the construction process, the air tube in a raw state is maintained to its toroidal conformation by an inner core susceptible of disintegration, said core giving the air tube sufficient consistency so as to enable it to bear any type of handling. This core, essentially consisting of powders aggregated by a binder, is disintegrated after vulcanization of the tyre and the remaining powders are removed from the air tube through one or more tyre inflating valves.

Use of a sufficiently rigid inner core susceptible of disintegration was made necessary in order to enable winding of the carcass cord round the air tube already shaped in an oval form, because the alternative solution of inflating the air tube to give it the necessary consistency during the tyre construction steps inevitably caused the air tube to acquire a right-section circular shape. To the ends of the present invention it is pointed out that "oval" and "elliptic" as herein considered are substantially equivalent terms.

A further type of tyre having a closed cross-sectional profile is shown in FR Patent 2 348 066. More particularly such a document discloses a tyre for wheels comprising two or more air chambers which form with a filler material disposed between the air chambers a inflatable core. Such inflatable core is shaped into a substantially elliptic conformation by inflation to a prestablished pressure. The inflatable core is covered by a carcass structure which is constituted by at least one thread-like element wound around the inflatable core.

The Applicant has become aware of the fact that laying down of the cord on the air tube having a circular shape in section would involve a variation in the radius of curvature of the cord at the moment of changing the air tube shape from circular to elliptic, as well as a variation in the cord thickness, thereby bringing about an uneven and unbalanced distribution of efforts in the carcass ply.

In accordance with an initial intuition the Applicant has noticed that thickness control and evenness of the turns disposed on the air tube is however less critical for high-performance tyres of lowered section, that is tyres in which the ratio between width and height is lower than or equal to 0.70.

However, based on this intuition which is only valid for particular items, a solution has been studied that could be appropriate for any type of tyre.

In accordance with the present invention it has been found that manufacture of a tyre can be greatly simplified and improved if the carcass structure is made by winding of one or more thread-like elements directly on the air tube, the latter being shaped in a substantially elliptic conformation and at least partly inflated to such a degree that it reaches a structural strength adapted to prevent it from being subjected to collapsing during working.

In more detail, the invention relates to a method of making a tyre for vehicle wheels, characterized by the features recited in the characterizing portion of claim 1.

Preferably the air tube is pre-vulcanized to a vulcanization degree at least equal to 50% and inflated to an actual pressure not exceeding 0.2 bar.

In accordance with a first embodiment, formation of the air tube involves the steps of: injecting an elastomer material into two opposite cavities defined between two respective mould-halves to be moved close to each other and a forming body or former interposed between said mould-halves, to define two halves of said air tube; removing the former from said mould-halves; moving the mould-halves close to each other so as to make the air tube halves fit together at the respective junction end edges; pre-vulcanizing the air tube within said mould-halves.

According to a possible alternative embodiment, formation of the air tube involves the following steps: introducing a predetermined amount of rubber latex into a cavity of a mould; causing rotation of the mould about at least two orthogonal axes so as to homogeneously distribute the rubber latex on the surfaces of said cavity; pre-vulcanizing the air tube.

Advantageously, winding up of said at least one thread-like element is carried out by causing rotation of a reel carrying the thread-like element about the transverse profile of the air tube, while the air tube itself is caused to substantially rotate about its own geometric axis of rotation.

Preferably, laying down of said at least one first thread-like element over the air tube takes place at a portion of the air tube which is guided between two mutually opposite guide collars.

It is also provided that during winding of said at least one first thread-like element, delivery of said thread-like element from the reel should be controlled so as to have a linear extent slightly lower than the outer perimetric extension of the air tube transverse profile, for each turn carried out by the reel about the air tube transverse profile, so that tensioning of the thread-like element does not exceed 2% of elongation.

Winding of said at least one first thread-like element can be preceded by a step of applying a first layer of raw elastomer material to the air tube.

This application preferentially takes place by winding a first ribbon-like element of raw elastomer material round the air tube transverse profile, creating turns disposed after each other in side by side relationship so as to form a first elastomer layer integrally covering the air tube itself.

According to a preferential alternative solution, formation of the carcass structure involves simultaneous winding up of at least two first thread-like elements disposed parallelly to define a first ribbon-like band.

Preferably, the individual thread-like element or elements forming said first ribbon-like band are previously incorporated into a layer of raw elastomer material joining them together before the winding step.

Still in accordance with the present invention, accomplishment of the carcass structure further involves application of a pair of annular anchoring elements to the first carcass ply, said anchoring elements being spaced apart from each other and extending circumferentially at a radially inner position relative to the air tube.

Preferably, application of said annular anchoring elements is carried out by axially moving the latter towards the air tube, which step is followed by a further rolling step of the annular anchoring elements.

Application of the annular anchoring elements may be preceded by a winding step of at least one second ribbon-like element of raw elastomer material about the transverse profile of the air tube, creating turns disposed after each other in side by side relationship so as to form a second elastomer layer covering the first carcass ply substantially integrally.

According to an alternative embodiment of the method in reference, application of the annular anchoring elements takes place concurrently with closure of the carcass structure into a vulcanization mould within which the annular anchoring elements are arranged.

In this case the annular anchoring elements may be made by injection of elastomer material into respective cavities defined within the vulcanization mould.

Alternatively, the annular anchoring elements are made of an injection-moulded elastomer material or by extrusion.

A step of incorporating at least one circumferentially-inextensible annular reinforcing insert into each of said annular anchoring elements may be also provided.

This annular reinforcing insert can be incorporated into the respective annular anchoring element during the manufacturing step of the latter, if it is made of an injection-moulded elastomer material.

Alternatively, each of said annular reinforcing inserts can be incorporated into the respective annular anchoring element by fitting through a cut arranged in the annular anchoring element.

Preferably, the annular anchoring elements are pre-vulcanized before being utilized for making said tyre.

Still in accordance with the invention, manufacture of the carcass structure further involves application of a holding and reinforcing textile structure to an outer surface of each of said annular anchoring elements.

This reinforcing textile structure may comprise at least one ribbon-like band applied to the respective annular anchoring element before application of the latter to the first carcass ply or it may be applied to the annular anchoring elements subsequently to their being applied to the first carcass ply.

In the last-mentioned case, the holding and reinforcing textile structure is preferably made by winding at least one second thread-like element round the transverse profile of the air tube to form turns disposed consecutively in side by side relationship along the whole circumferential extension of the air tube, in order to define a second carcass ply superposed on the first carcass ply.

Winding up of the second thread-like element can be preceded by a step involving covering of same with a layer of raw elastomer material.

Formation of the second carcass ply may involve a simultaneous winding of two or more of said second thread-like elements disposed parallelly in side by side relationship so as to form a ribbon-like band and optionally incorporated in a layer of raw elastomer material joining them together before their winding step.

Application of the second carcass ply is preferably followed by a circumferential cutting step, in which said second carcass ply is cut at a radially internal region with respect to the air tube included between said annular anchoring elements.

The cut flaps of the second carcass ply are then conveniently shaped to make them adhere to the surfaces of the anchoring elements and the first carcass ply.

Preferably, the method in question further comprises a step of applying protection elements of elastomer material to the outer surfaces of the carcass structure.

Application of these protection elements of elastomer material can be advantageously carried out by closure of the carcass structure inside a vulcanization mould within which the protection elements are arranged.

The protection elements can be obtained by injection of elastomer material into respective cavities defined within said vulcanization mould.

Advantageously, manufacture of the belt structure and tread band involves the following steps: applying at least one belt strip around a support drum; circumferentially applying a tread band of raw elastomer material about said at least one belt strip, so that said belt structure and tread band form an annular element to be coupled with said carcass strip.

The tread band can be advantageously made by spirally winding at least one continuous ribbon-like element of elastomer material about the belt structure, said ribbon-like element being produced by extrusion.

A step of arranging a sleeve of raw elastomer material fitted on the support drum before application of said at least one belt strip may be also provided.

The annular element and carcass structure can be vulcanized separately from each other and mutually coupled in a removable manner.

In this case, at least one circumferential hump is preferably formed at a radially outer position on the carcass structure, before vulcanization of said carcass structure; in addition, in the belt structure, before vulcanization thereof, at least one anchoring seating conforming in shape to said circumferential hump is also defined.

The circumferential hump may be advantageously made by circumferential winding of at least one ribbon-like element round the carcass structure.

According to a possible alternative embodiment, the annular element and carcass structure are vulcanized simultaneously after their mutual coupling.

According to a further innovatory and advantageous aspect of the invention, during vulcanization the carcass is inflated by admission of a fluid under pressure to the air tube.

The carcass can be also maintained to an inflated condition during a cooling step carried out after said vulcanization step. Vulcanization canbe carried out either through heat supply by microwaves, or through heating of the mould walls by electromagnetic induction.

In accordance with a possible embodiment, said belt structure can be obtained by winding at least one belt strip directly around the carcass structure.

Further features and advantages will be more apparent from the detailed description of some preferred but non-exclusive embodiments of a tyre for vehicles in accordance with the present invention, coupled with a respective rim.

This description will be taken hereinafter with reference to the accompanying drawings, given by way of non-limiting example, in which:
- Fig. 1 is a half-section of a wheel made up of a tyre and a rim made in accordance with the present. invention, seen in section along a plane radial to the rotation axis of the tyre;
- Fig. 2 is a half-section similar to Fig. 1, based on a second embodiment of a wheel in accordance with the invention;
- Fig. 3 shows a third embodiment of a wheel also seen in section along a plane radial to the rotation axis of the tyre;
- Fig. 4 diagrammatically shows accomplishment of a winding step of a thread-like element for making a carcass structure about the transverse profile of an air tube;
- Fig. 5 diagrammatically shows the tyre carcass seen in cross-section, introduced into a vulcanization mould, on closing of the mould;
- Fig. 6 is a schematic top view of a plant for making tyre carcasses in accordance with the process in reference;
- Fig. 7 is a schematic view of a plant portion to be used for making belt and tread band structures.

In each of said figures, the different wheel components in accordance with the invention are distinguished by the same reference numerals as used for the corresponding wheel parts in the other figures.

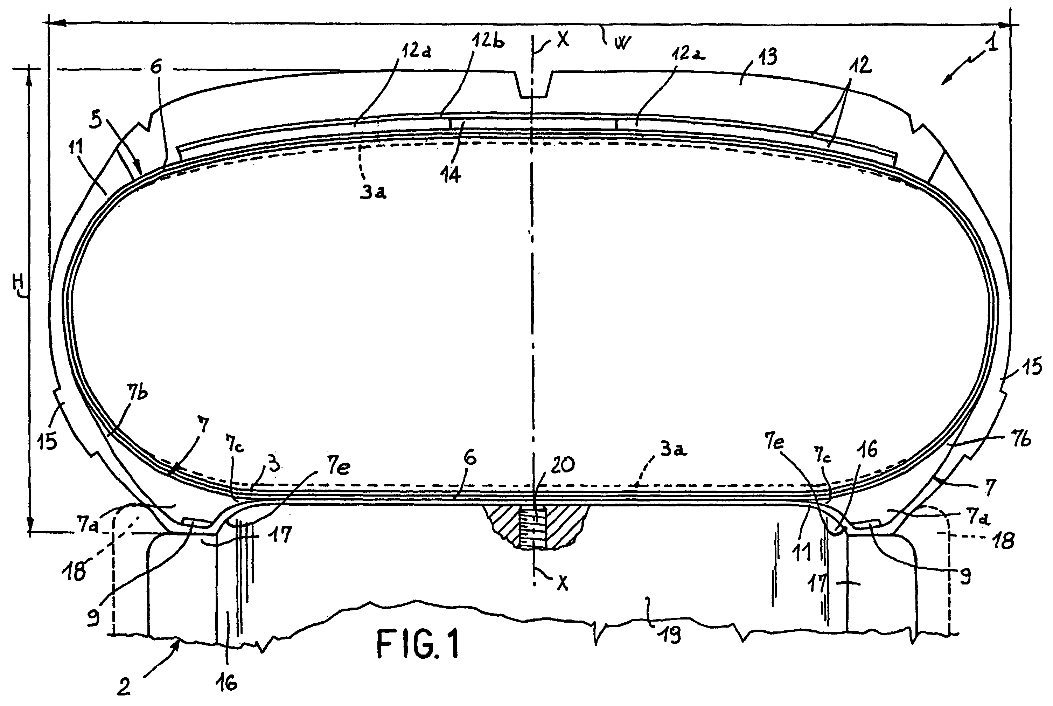

For the sake of clarity in the drawings, section chain lines have been purposely omitted from tyres shown in Figs. 1, 2 and 3.

The foregoing being stated, a tyre for vehicles in accordance with the present invention has been generally identified by reference numeral 1.

Tyre 1 lends itself to be associated with a respective rim 2 so that altogether they define a vehicle wheel.

Tyre 1 comprises an air tube 3 of toroidal conformation, essentially defined by a tubular element extending circumferentially about the geometric axis of the tyre.

To the ends of the present invention, by "inflatable core" it is intended an inflatable toroidal element such as an air tube 3 for example, or a composite element wherein the air tube is only one of the parts forming it. For description purposes, this inflatable core will be in the following also called "air tube", unless said core is a composite element obtained by associating the air tube with an element external thereto.

As shown in the accompanying figures, the air tube 3 has a transverse profile in the form of a closed ring, of an elongated elliptic configuration parallel to the rotation axis of the tyre. By transverse profile it is herein intended the configuration offered by the air tube half-section cut through a plane radial to the rotation axis of tyre 1.

As already seen, maintaining of this elliptic configuration during the tyre manufacturing steps, even on increasing of the inflating pressure, is essential for achieving a high qualitative level in the finished tyre.

The air tube 3 is preferably made of a material impervious to air, natural or butyl rubber for example, preferably butyl rubber, adapted to withstand more than one vulcanization cycles without losing its mechanical and imperviousness features.

In more detail, the air tube 3 can be advantageously obtained by an injection moulding process according to a technique usually known as "moulding of 'hollow bodies". In accordance with this technique, an elastomer material, preferably butyl rubber, is injected into two opposite cavities defined between two respective mould halves located close to each other and an inner core or former interposed between the mould halves. Said former is of such structure and sizes that it keeps the mould halves slightly separated from each other, so that the end edges of the air tube halves are mutually separated at the end of the injection step. When injection has been completed, the core or former is removed from the mould halves and said mould halves are moved close to each other so that they bring the air tube halves to fit together at the respective opposite end edges. The air tube closed in the mould is vulcanized or pre-vulcanized until a vulcanization degree at least of 50% causing, by effect of molecular cross-linking of the elastomer material, combination of the two parts to form a single piece.

To the ends of the present invention, the above mentioned known moulding art for hollow bodies is preferred in that it enables regions of differentiated resistance to pressure to be formed in the extension of the transverse profile of the air tube. In particular, regions of greater thickness 3a can be obtained at the tyre intrados and/or extrados for example, in order to ensure maintaining of the elliptic conformation by the air tube during the following steps of the manufacturing process.

In addition or in alternative to the above solution, these regions of differentiated resistance 3a may be made of materials of different modulus, preferably greater than that used to make the remaining part of the air tube 3.

Formation of the air tube 3 can be also obtained for example by a moulding process according to which a very fluid elastomer material, rubber latex for example, is introduced into the cavity of a mould which is subsequently set in rotation on a gyroscopic system defined by at least two orthogonal axes. Rotations performed by the mould about either axis of the gyroscopic system are controlled in such a manner that a homogeneous distribution of the elastomer material on the inner walls of the mould cavity is ensured. When distribution is over, the elastomer material is vulcanized or pre-vulcanized following the desired vulcanization degree.

Alternatively, the air tube 3, independently of how obtained, can be employed for one or more steps of the manufacturing process of the raw carcass in a non-vulcanized form.

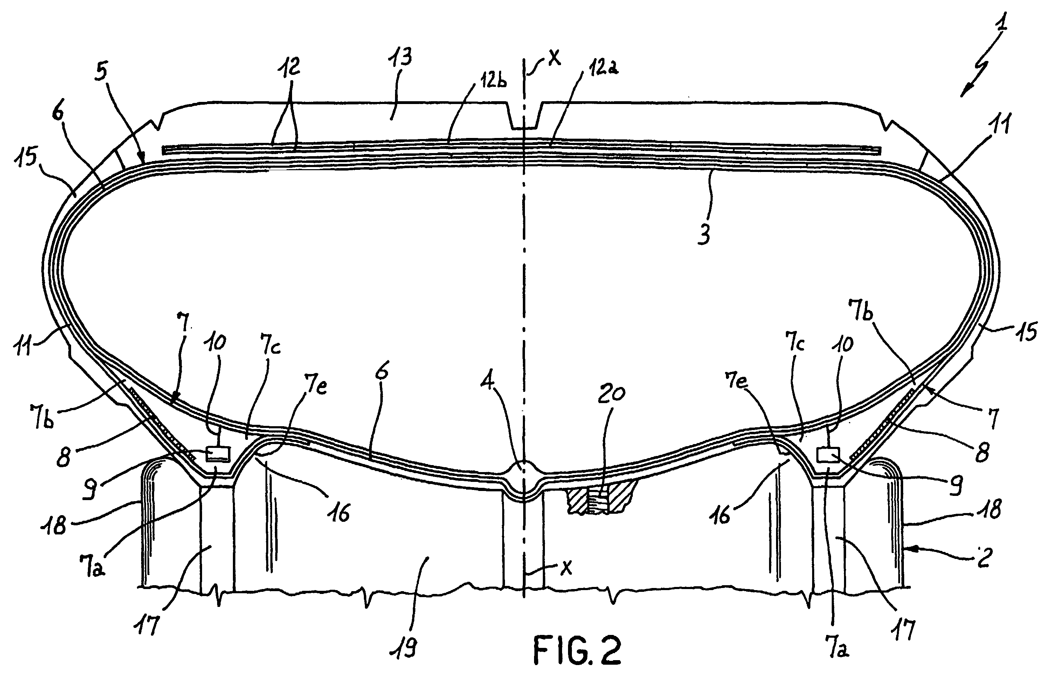

The air tube 3 can be advantageously provided, for said core formation, with at least one raised body that in the embodiment shown in Fig. 2 is defined by a circumferential ribbing 4 located at a radially inner position relative to the air tube itself.

This circumferential ribbing 4 can be advantageously utilized, as will be better understood in the following, as a reference and guide element during the working processes for making tyre 1. The raised body 4 can be advantageously made of a self-sealing material, so as to enable admission of air, for tyre-inflating purposes, by means of a needle or the like introduced into the raised body. In a manner known per se, upon drawing out of the inflating needle, the self-sealing material forming the raised body 4 closes upon itself thereby causing a hermetic seal of the hole produced by the needle.

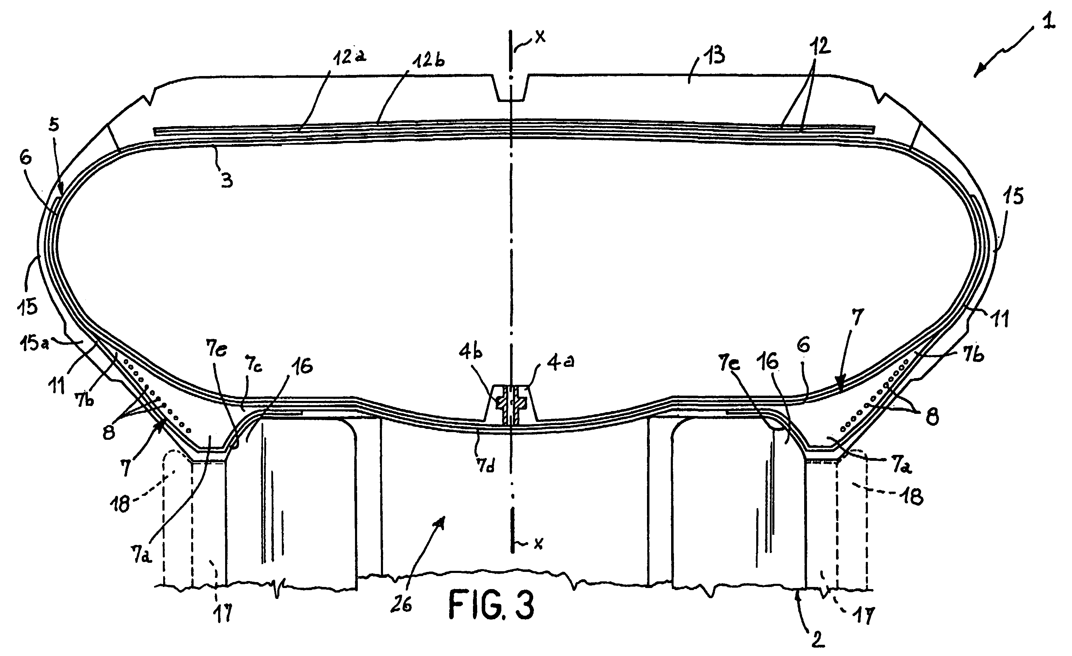

In accordance with a further alternative solution shown in Fig. 3, ribbing 4 is replaced by one or more raised bodies 4a of one piece construction with the air tube 3 and projecting internally thereof. Preferably, four raised bodies 4a are provided and they are disposed circumferentially being spaced apart 90° from each other. Defined in each raised body 4a, directly during the step of forming the air tube 3, is a seating into which an airtight one-way valve 4b is fitted. Valve 4b, known per se and therefore not further described, can advantageously be made of an elastomer material incorporating fillers of magnetic material. This enables the valve to be easily identified with the aid of appropriate sensor means, for the purpose of inflating the tyre, in spite of its being invisible from the outside, in that it is hidden under the carcass structure 5.

For tyre inflation, the raised body 4, 4a can be replaced by a check valve provided with a closure member of known and conventional type.

The air tube 3 is enclosed in a carcass structure 5 comprising at least one first carcass ply 6 directly made about the closed ring-shaped transverse profile of the air tube itself. More particularly, the first carcass ply is advantageously formed of at least one thread-like element, consisting of a monofilament or a bundle of monofilaments for example, or a textile cord of sizes included between 0.28 mm and 1.2 mm measured following ASTM-D-1777 standard, wound about the transverse profile of the air tube so as to form turns disposed consecutively in side by side relationship at least at the radially inner surfaces of the air tube 3, and distributed over the whole circumferential extension of the air tube itself.

The material of said thread-like element can be any known textile or metallic material, adapted for the purpose: preferably used are either natural fibres such as rayon or synthetic fibres such as aramide, nylon, a polyester fibre or polyethylene-naphthalene-2,6-dicarboxylate, best known as PEN.

Each of the turns formed by the thread-like element is preferably disposed in a plane substantially radial to the rotation axis of the tyre. More specifically, each of the turns forming the first carcass ply 6 should preferably be oriented at an angle included between 73° and 90°, 87° for example, relative to the circumferential-extension direction of the tyre.

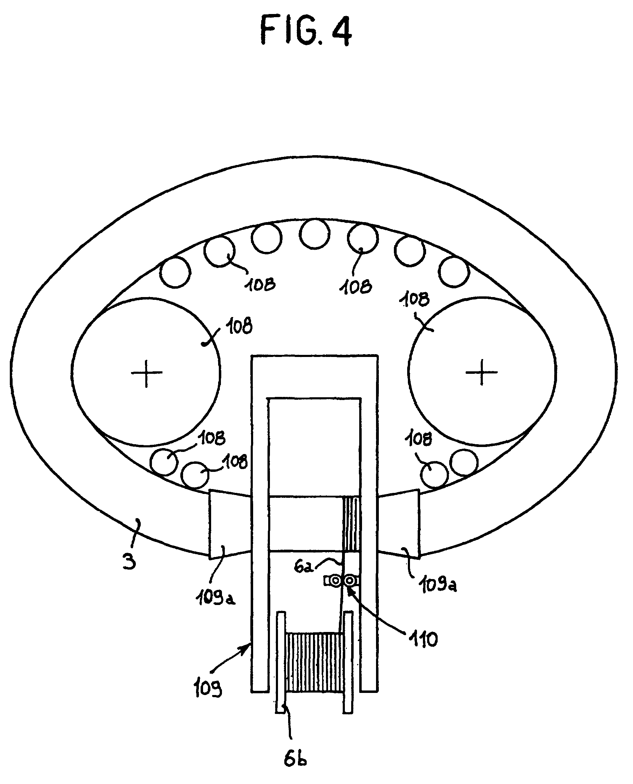

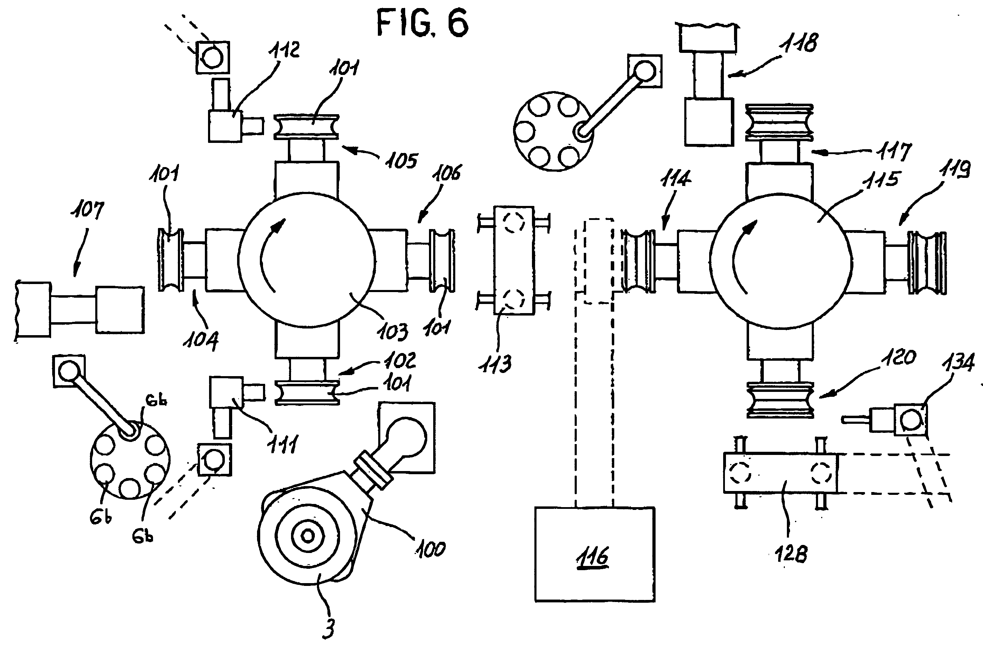

As clearly shown in Figs. 4 and 6, for making the first carcass ply 6 it is advantageously provided for the air tube 3 to be mounted, by a handling device 100, on a support drum 101 located in a first working station 102. The support drum can be mounted on a first revolving turret 102 carrying three other similar support drums 101 for example, that are disposed at a second, third and fourth working stations 104, 105 and 106, respectively.

Through valve 4b, the air tube 3 is inflated to an actual pressure greater than the atmospheric pressure, preferably included between 0.01 and 0.2 bar, and preferably corresponding to 0.075 bar.

By this inflation, the air tube 3 takes a substantially elliptic conformation. To the ends of the present invention, shaping of an element involves a variation in volume of the element itself, usually in terms of volume increase.

Following an angular rotation performed by the first revolving turret 103, the air tube is transferred to a first winding unit 107 located close to the second working station 104, to be fitted - as shown in Fig. 4, on a guide and movement device comprising a set of guide rollers 108.

At least one of the guide rollers 108 can be set in rotation so as to cause the air tube to turn according to the rotation axis of the tyre.

Ribbing 4 can be advantageously utilized for guiding the air tube 3 in its movement according to the rotation axis of the tyre.

The first thread-like element 6a is previously wound on a reel, a spool or other appropriate support element 6b, mounted on a rotating annular distributor 109 that is disposed about the transverse profile of the air tube. The annular distributor 109 can be driven in rotation about its own axis so that the support reel 6b of the thread-like element 6a is caused to turn about the sectional profile of the air tube 3, while the air tube 3 is caused to rotate substantially about its own geometric axis of rotation upon the action of the guide rollers 108.

The rotation speed of the air tube about the rotation axis of the tyre and the revolution speed of the reel or spool 6b carrying the cord 6a round the circumferential direction of the air tube 3, can be easily adjusted with respect to each other, so that turns formed by the cord are laid down at the desired thickness, preferably included between 60 and 120 cords/dm and at the desired angle relative to the circumferential-extension direction of the tyre.

Laying down of turns in planes substantially radial to the tyre axis gives rise to a thinning or decrease in the turn thickness at the radially outermost regions of the air tube, relative to the radially innermost regions. The variation in thickness resulting from this thinning is however within the provided tolerance limits.

Preferably, laying down of the thread-like element 6a on the air tube 3 takes place at a portion of said air tube that is guided between two mutually opposite guide collars 109a, axially passed through by the air tube 3 so as to cause centring of the latter relative to the rotation axis of the annular distributor 108 and shaping in conformity with the desired transverse profile.

The desired shaping of the air tube 3 in an elliptic conformation can be also achieved or facilitated by creating regions of differentiated resistance through application of one or more circumferential strip-like elements intended to form said core in association with said air tube 3, at a radially outer and/or inner position relative to the air tube itself, in addition to or in place of arranging regions having a greater thickness and/or a different modulus 3a and guide collars 109a.

Advantageously, during the above described winding step, the thread-like element 6a is engaged by a driving unit 110 mounted on the annular distributor 108 and engaging the thread itself at a portion included between the support reel 6b and the air tube 3. The driving unit 110, not described in detail as it can be made in a manner known per se and in any case not of importance to the ends of the invention, is essentially comprised of a capstan driven in rotation in synchronism with the rotation of the annular distributor 108, so as to constantly control delivery of the thread-like element 6a from the support reel 6b.

In more detail, delivery of the thread-like element 6a is provided to take place, for each turn carried out by reel 6b round the transverse profile of the air tube 3, to an extent slightly lower than the outer perimetric extension of said transverse profile. Thus one can be sure that the thread-like element 6a is laid down delicately on the air tube 3, preferably with a tension not exceeding an elongation of 2%, so that too important deformations of the air tube are not involved.

Still in accordance with the present invention, formation of the first carcass ply 6 can take place by simultaneous winding of two or more cords or thread-like elements disposed parallelly so that ultimately they form a first ribbon-like band that will be wound following the same modalities as previously described. with reference to winding of a single cord. Preferably, said ribbon-like band comprises two to twenty thread-like elements parallel to each other.

Advantageously, at least one first layer of elastomer material (not shown in the accompanying figures) may be interposed between the first carcass ply 6 and the air tube 3. This first layer is created for example by applying a sheet of elastomer material in a raw state to the air tube before formation of the carcass ply 6, by means of a first extrusion die 111 for example, operating in the first working station 102.

In a preferential solution the first layer of elastomer material is preferably formed by winding a ribbon-like element of elastomer material on the circumferential extension of the air tube 3 so as to form turns disposed consecutively in side by side relationship, in the same manner as previously described with reference to the cord forming the first carcass ply 6.

The elastomer material applied in a raw state ensures the optimal adhesion of the cord or cords laid down to form the first carcass ply 6 and in addition prevents the material forming the air tube 3 from being possibly damaged as a result of shearing stresses transmitted from the inextensible cord forming the carcass ply.

Advantageously, the first thread-like element or the thread-like elements forming the first ribbon-like band employed in making the first carcass structure 5 are provided to be directly incorporated, by an extrusion operation, into a layer of raw elastomer material joining them together before their being applied to the air tube 3. In this way application of the first layer of raw elastomer material in the first working station 102 can be avoided.

In a third working station 105 a second layer of raw elastomer material can be applied to the first carcass ply 6 formed in the second working station. The second elastomer layer may directly come from a second extrusion die 112, or it may consist of a second ribbon-like element of raw elastomer material that is wound round the transverse profile of the air tube 3 in turns disposed successively side by side, to cover the first carcass ply 6 in a substantially integral manner, by an apparatus similar to the one employed in forming said carcass ply.

Application of this second elastomer layer can be avoided as well, if in making the first carcass ply 6 a thread or a band of threads incorporated in a layer of elastomer material is utilized.

The carcass structure 5 further comprises a pair of anchoring elements 7, axially spaced apart from each other and extending circumferentially in a radially inner position on the surface of said air tube 3. By means of these annular anchoring elements 7 preferably made of an elastomer material optionally reinforced with aramidic fibres and having a hardness included between 72° and 94° A Shore, a steady engagement between the tyre 1 and rim 2 is achieved, as better illustrated in the following.

For the above purpose, each annular anchoring element 7 preferably has a main portion 7a the cross-sectional profile of which is substantially cusp-shaped, so as to define an inner circumferential projection relative to the air tube 2 and the first carcass ply 6 formed thereon. Each anchoring element 7 in addition has at least one prolongation portion 7b extending from the main portion 7a and tapering away from the rotation axis of the tyre. On the opposite side from the prolongation portion 7b, each anchoring element 7 has a radially and axially internal end portion 7c tapering in the direction of the equatorial median plane of the tyre, denoted by line X-X.

As shown in Fig. 3, the radially and axially internal end portions 7c of the annular anchoring elements 7 can be prolonged until they meet so as to form an interconnecting portion 7d between the anchoring elements, thereby stabilizing the mutual axial positioning of same. This solution may appear to be particularly advantageous during the tyre manufacturing step in order to easily establish the exact positioning of the anchoring elements relative to the air tube 3 and the first carcass ply 6 formed thereon.

Each annular anchoring element 7 can be also provided, preferably at the prolongation portion 7b thereof, with at least one textile reinforcing band 8 that can be surface-applied as shown in Fig. 2 or incorporated into the anchoring element, as shown in Fig. 3.

The anchoring elements 7 7 can be made by injection moulding or by extrusion. In the example in Fig. 6, for application of said anchoring elements to the first carcass ply 6, the carcass structure 5 during its manufacturing step is picked up from the fourth working station 106 by a first transfer ring 113, to be mounted on a fifth working station 114 interlocked to a second revolving turret 115.

The annular anchoring elements 7 formed in a moulding station 116 for example, reach the fifth working station where they are applied to the first carcass ply 6, being preferably axially moved close to the air tube 3. This axial approaching step can be carried out by a step involving rolling of the annular anchoring elements 7 carried out in a manner known per se, in order to ensure an intimate adhesion of said annular elements to the carcass ply 6 or the second layer of elastomer material covering said carcass ply.

As shown in the embodiments in Figs. 1 and 2, each annular anchoring element 7 in addition may comprise at least one annular reinforcing insert 9 which is at least partly incorporated in the main portion 7a. In more detail, the annular reinforcing insert 9 can appear on the surface of the main body 7a, at a radially inner position, as can be seen in the embodiment in Fig. 1.

In this case, the annular reinforcing insert 9 can be partly incorporated in the respective annular anchoring element 7 during the injection moulding step carried out for making said anchoring element. Alternatively, the annular reinforcing insert 9 can be integrally incorporated in the main portion 7a, as shown in Fig. 2. In the last-mentioned case, the annular anchoring element 7 is preferably provided with at least one circumferential fitting cut 10 extending from the annular reinforcing insert to an outer surface of the main body, preferably at a radially outer position relative to said body. Through this circumferential cut 10, fitting of the annular reinforcing insert 9 into the annular anchoring element 7 is carried out. Said anchoring element can be pre-vulcanized before its use in making tyre 1.

Advantageously, the annular reinforcing insert 9 can be made either of a metallic material or of a textile material such as an aramidic fibre, preferably by one or more thread-like elements wound round the rotation axis of tyre 1 so as to form turns thereon, substantially in the same manner as usual reinforcing bead cores in known tyres having an open toroidal profile.

Advantageously, each annular anchoring element 7 is externally applied to the first carcass ply 1. In an alternative embodiment of the present invention viewed in Figs. 2 and 3, each annular anchoring element 7 is further covered, on the opposite side relative to the carcass ply, with at least one textile holding and reinforcing structure 11. Preferably this textile holding and reinforcing structure 11 goes beyond the opposite circumferential edges of the anchoring element, extending over the first carcass ply 6.

In the embodiment shown in fig. 3, the textile holding and reinforcing structure, for each anchoring element 7 comprises at least one ribbon-like band 11 extending along the whole circumferential extension of the anchoring element.

This ribbon-like band 11, for instance, can be comprised of cords of natural or synthetic textile fibre, aramide fibre for example, disposed parallel to each other, oriented at an angle included between 17° and 0° relative to the extension direction of the cords belonging to the first carcass ply 6, preferably in a symmetric manner relative to a meridian plane of the tyre.

The ribbon-like band 11 can be advantageously applied to the respective annular anchoring element 7 before or after application of the anchoring elements to the first carcass ply 6.
Alternatively, as shown in the embodiment in Fig. 2, the textile holding and reinforcing structure can be made of at least one second carcass ply 11 extending round the first carcass ply 6 and the annular anchoring elements 7.

The second carcass ply 11 can be advantageously made at a sixth working station 117 provided with a second winding unit 118 similar to the first winding unit 107. In this case the second carcass ply 11 is made by winding at least one second thread-like element round the first carcass ply and the annular anchoring elements 7, in the same manner as explained with reference to the first ply 6, thereby obtaining turns disposed consecutively in side by side relationship along the circumferential extension of the anchoring elements. In this case too the thread-like element utilized in making the second carcass ply 11 can be incorporated in a layer of elastomer material. The second carcass ply 11 may be also made by simultaneously winding two or more second thread-like elements disposed parallelly side by side to form a second ribbon-like band comprising two to twenty second thread-like elements for example, optionally incorporated in said layer of elastomer material.

The material of said thread-like elements can be any convenient known textile or metallic, natural or synthetic material and it can even be the same material as the one utilized for making the first carcass ply 6. Preferably, turns forming the second carcass ply 11 are oriented at an angle included between 73° and 90° relative to the circumferential-extension direction of the tyre, oppositely to the orientation of the turns belonging to the first ply 6. Preferably the cord or cords employed in making the second carcass ply 11 have a size included between 0.28 mm and 1.2 mm, measured following ASTM-D-1777 standard, and the turns they form are distributed with a thickness included between 60 and 120 cords/dm, measured at a circumferential position external to the air tube 3.

If the thread-like elements employed in making the second carcass ply 11 are not previously covered with elastomer material, application of a third layer of elastomer material round the second ply may be provided. This application can be. carried out in a seventh working station 119, in the same manner as previously described with reference to application of the first and second elastomer layer, if any.

As shown in Fig. 2, the circumferential extension of the second carcass ply can be stopped at the radially inner region of the tyre included between the annular anchoring elements 7.

Interruption of the circumferential extension of the second carcass ply 11 can be advantageously carried out by circumferentially cutting the carcass ply itself once the helical winding of the cord or cords to form said carcass ply has been accomplished. This cutting operation is made easier by the fact that at the region included between the annular anchoring elements 7 the second carcass ply 11 is located spaced apart from the first carcass ply 6, because the cusp-shaped main portion 7a of each annular anchoring element 7 projects at a radially inner position from the first carcass ply.

Once the circumferential cutting. operation has been completed, the flaps of the second carcass ply 11 can be applied to the inner end portions 7a of the reinforcing elements 7 and the radially inner portion of the first carcass ply 6, so that they conform in shape to the transverse sectional profile of said elements, by means of a rolling operation, for example.

The above mentioned cutting and rolling steps can be carried out at an eighth working station 120.

Preferably, as previously described and illustrated in the accompanying figures, the cross-sectional profile of the air tube 3 and the carcass structure 5 has an axially-elongated elliptic configuration relative to the tyre. Preferably the ratio between the maximum radial size H and maximum axial size W of the tyre taken as a whole is lower than or equal to 0.65.

Tyre 1 further comprises a belt structure 12 circumscribing the carcass structure 5 at a radially outer position with reference to the rotation axis of the tyre. Circumferentially applied to the belt structure 12 is a tread band denoted by 13.

Belt structure 12 can be made by winding of at least one belt strip directly round the carcass structure 5.

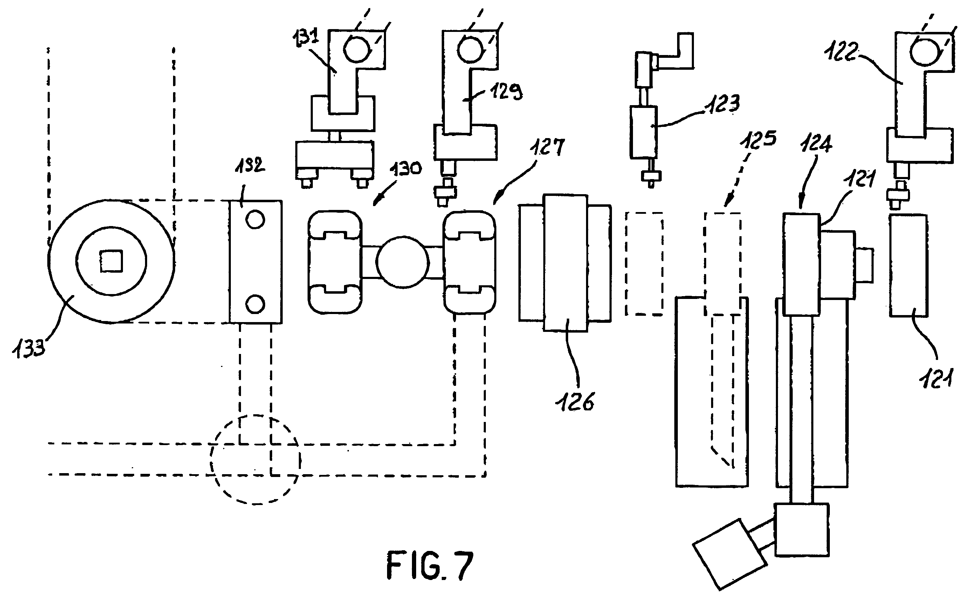

Alternatively, as shown by way of example in the schematic view in Fig. 7, for accomplishment of belt structure 12 first formation of a sleeve of elastomer material 12a (Figs. 1-3) is provided, by winding up a ribbon-like strap directly fed from a third extrusion die 122 on a cylindrical drum denoted by 121 in Fig. 7 for example, so as to form turns disposed axially in side by side relationship.

Alternatively, sleeve 12a can be formed directly by extrusion of a tubular workpiece, which is then fitted on the cylindrical drum 121. Then an inextensible belt strip is applied to sleeve 12a, which belt strip is obtained from a spiralling unit 123 for example, that carries out winding of one or more cords to form a plurality of circumferential turns disposed consecutively side by side.

As shown in Fig. 7, application of the inextensible belt strip 12b can be preceded by application of one or more mutually-crossed cord-made strips, these applications being carried out in a first and a second application stations 124, 125, respectively.

Through a second transfer ring 126, the belt structure 12 is then picked up from the operating site interlocked to the spiralling unit 123, to be fitted on the previously produced carcass structure 5 and transferred from the eighth working station 120 to a ninth working station 127, by means of a third transfer ring 128, for example.

In this ninth station, application of the tread band 13 to the belt structure 12 can be carried out. The tread band 13 can be advantageously made by winding of at least one continuous elongated element of raw elastomer material round the belt structure. This continuous elongated element can be advantageously produced by a fourth extrusion die 129 directly operating on the ninth working station 127.

Application of further tyre components can be carried out for example in a tenth working station 130; such components may be for instance the tyre sidewalls 15 that can be also produced by circumferentially applying a continuous strip-like element of raw elastomer material to the carcass structure 5. This continuous strip-like element too can be produced by a respective fifth extrusion die 131 operating in the tenth working station.

By a fourth transfer ring 132 or equivalent means the thus manufactured tyre can be then introduced into an appropriate mould 133 and submitted to a vulcanization step.

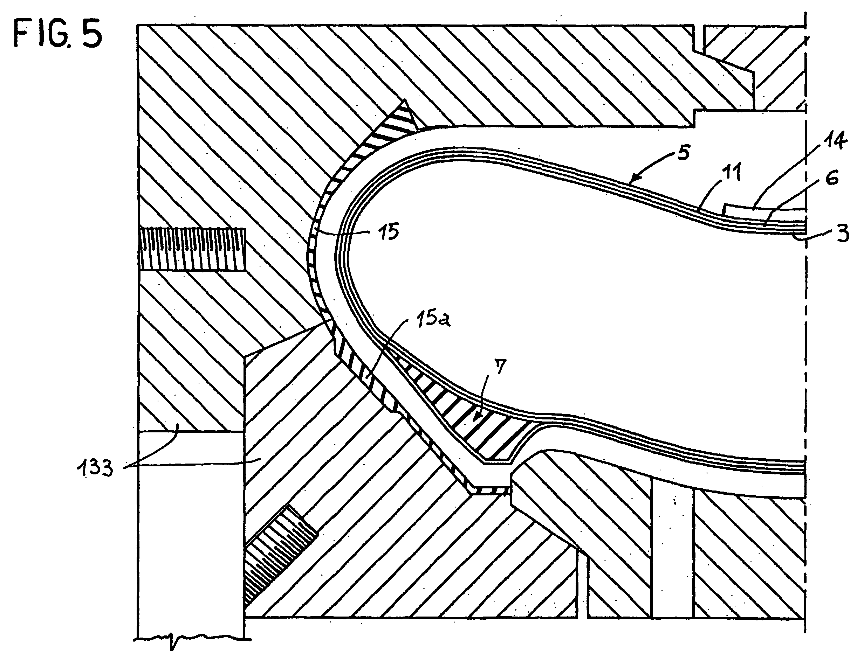

Advantageously, the carcass structure 5 can be introduced into mould 133 while keeping the same pressure as created during the conformation step, or under deflated conditions, as in Fig. 5, and be subsequently inflated by admission of air or other fluid under pressure to the air tube 3 in order to ensure adhesion thereof to the inner mould walls during the vulcanization step. Carcass 5 can be advantageously maintained under inflated conditions even during the cooling step following vulcanization. This aspect is particularly advantageous in that it has been found that tyre cooling under inflated conditions gives the tyre better qualitative features.

The above described steps in connection with the belt structure 12 and tread band 13 manufacture give rise to a monolithic tyre in which the carcass structure 5 is vulcanized simultaneously with the annular element comprised of said belt and tread band structures.

However, in accordance with the present invention, the belt structure 12 and tread band 13 may be provided to be mutually assembled separately from the carcass structure 5, to be applied to the latter before the tyre vulcanization step. In accordance with a further alternative solution, the annular element formed of the belt structure 12 and the tread. band 13 may be vulcanized separately from the carcass structure 5, to be associated with the latter subsequently to the carcass vulcanization.

In this case, the assembly formed of the belt structure 12 and tread band 13 can be easily replaced in case of damages to the tread band or wear thereof or when the tread band is to be replaced due to different operating requirements, if it is necessary to pass from a winter tread band to a summer thread band, for example.

In accordance with a further feature of the present invention, at least one circumferential hump 14 can be defined on the carcass structure 5, at a radially outer position, said hump 14 engaging in an anchoring seating conforming in shape to it and defined in the belt structure 12. This solution is particularly useful for fixing the axial positioning of the belt structure 12 and consequently the tread band 13 relative to the carcass structure 5, above all in the case in which the belt structure-tread band assembly is made as a replaceable element vulcanized separately from the carcass structure 5. In this case it is advantageously possible to-carry out a quick replacement of the tread band 13, together with the belt structure 12, in case of wear for example or when mounting of a tread band and belt having different operating features is required.

Said circumferential hump 14 can be obtained, for instance, by circumferential winding of at least one ribbon-like element, made of aramide pulp or other appropriate material, applied to the carcass structure 5.

Application of the circumferential hump can be carried out by a further extrusion die 134 for example, operating at the eighth working station shown in Fig. 6.

Further protection elements forming the tyre, such as the sidewalls 15 and bead-protecting elements 15a for example, can be associated with the carcass structure directly during the vulcanization step thereof. In this case, the sidewalls 15 and/or bead-protecting elements 15a and/or other protection elements can be obtained by injection of elastomer material into respective cavities defined within the vulcanization mould 133 when the latter is closed around the carcass structure 5. Once the inner core has been removed, the protection elements 15, 15a keep an adhering position relative to the inner mould walls, as shown in Fig. 5, to be then applied to the outer surfaces of the carcass structure 5 following closure and subsequent inflating of said carcass structure within the vulcanization mould.

It is important. to note that, in accordance with the present invention, the air tube 3 is preferably shaped by inflation to a first pressure, adapted to give said air tube an elliptic conformation and said shape is preferably maintained substantially unchanged over the whole manufacturing steps of the raw carcass.

During the vulcanization step, carcass 5, once it has been closed in mould 133, is inflated to a second pressure, higher than said first pressure, to bring it to adhere to the inner mould walls so as to obtain moulding of the tread pattern impression and the sidewall pattern. Preferably, said second pressure is maintained during the following tyre cooling step.

Still in accordance with the present invention, tyre 1 lends itself to be utilized in combination with a rim 2 usually comprising a central portion (not shown) for connection to a hub of a vehicle wheel.

Rigidly linked to said central portion is coupling means for connection with tyre 1 that, in accordance with the present invention, comprises a pair of circumferential abutment surfaces 16 located at axially opposite positions relative to an equatorial median plane of the rim, coincident with the equatorial plane X-X of tyre 1, and facing away from the equatorial plane itself.

Each of these circumferential abutment surfaces 16 conforms in shape to, and interacts with the main surface 7a of the corresponding annular anchoring element 7 that, within the tyre structure, is located in the region usually identified as the bead. In more detail, as clearly shown in Figs. 1 to 3, the main portions 7a of the annular anchoring elements 7 have respective locating sides 7e substantially facing each other and arranged to act and bear on the respective circumferential abutment surfaces 16. Thus a stable axial positioning of the annular anchoring elements or beads 7 is achieved. Each of them, in fact, cannot move towards the equatorial plane X-X of tyre 1 in that it is retained by the corresponding circumferential abutment surface 16 of rim 2, and also cannot move away from said equatorial plane X-X in that it is connected to the other annular anchoring element 7 through the carcass ply or plies 6, 11. Preferably, a cylindrical centring surface 17 coaxial with the wheel rotation axis follows each of the circumferential abutment surfaces 16, away from the equatorial plane X-X, on which cylindrical surface 17 the inner circumferential edge of the cusp-shaped main portion 7a of the respective annular anchoring element 7 acts and bears.

In addition, an auxiliary circumferential locating portion 18 (denoted in chain line in Figs. 1 and 3) may be arranged in the extension of each cylindrical centring surface 17, at an opposite position relative to the circumferential abutment surface 16, to give further assurance as regards the steady anchoring of the tyre bead 7. In this case, preferably, the annular element comprising said auxiliary circumferential locating portion 18 is fastened in a removable manner to rim 2 in order to facilitate tyre fitting thereon.

As shown in Fig. 1, the circumferential abutment surfaces can be mutually interconnected by a cylindrical connecting portion 19, on which the inner circumferential region of the carcass structure 6 acts and bears.

Alternatively, the connecting portion 19 of rim 2, can be shaped in such a manner as to offer a curved cross-sectional profile the concavity of which is turned externally of the rim itself, as provided in the embodiment shown in Fig. 2. This embodiment gives better assurance for a steady coupling between the tyre beads 7 and the circumferential abutment surfaces 16. Actually, by effect of the pressure created within tyre 1 following inflation thereof, the carcass ply or plies 6, 11 match the concave profile of the connecting portion 19, causing tensioning of said carcass plies and, as a result, an axial-thrust action of the annular anchoring elements 7 against the abutment surfaces 16 of rim 2. Preferably, the difference between the linear extension of the cross-sectional profile of the connecting portion 19 and the axial distance between the opposite circumferential edges of this portion corresponds to the elastic elongation undergone by the carcass structure 5 at the region included between the annular anchoring elements 7, when the tyre is submitted to an inner inflating pressure.

At least one pressure transducer 20 of known and conventional type may be also operatively engaged through the interconnecting portion of rim 2, said transducer being adapted to detect the inner pressure of tyre 1 through the thrust exerted by the ply or plies 6, 11 of the carcass structure 5.

Advantageously, the presence of transducer 20 does not involve any problem and does not require any particular expedient as regards airtightness in tyre 1. In fact, since tyre 1 is of tubular structure, it is perfectly capable of retaining the air contained therein without requiring any cooperation by rim 2 for this purpose.

Transducer 20, engaged through rim 2, is in conclusion located externally of tyre 1 and therefore it is unimportant as regards air tightness.

Alternatively, for the purpose of facilitating operations for assembling and disassembling the tyre to and from the corresponding rim 2, this rim can be made in a dismountable manner, that is made of two or more separate parts removably linked to each other to form a complete rim. These separate parts may comprise at least one disc for connection with the vehicle hub, to which a ring is fastened, which ring at a radially outer position has the same profile as defined by the circumferential abutment surfaces 16 and the connecting portion 19.

In accordance with a further possible embodiment shown in Fig. 3, rim 2 can be devoid of any interconnecting portion between the circumferential abutment surfaces 16. In this case, the carcass structure 5 will be free to take a convex configuration as a result of inflation, within a space 26 defined between the circumferential abutment surfaces 16 that will be mechanically interconnected by means of said central portion or in another similar manner.

The invention achieves important advantages over the known art.

The tyre in reference is in fact obtained by forming the carcass structure directly round a pre-vulcanized air tube utilized as a support for making said carcass structure as well as for applying the other different tyre components.

Thus it is possible, to eliminate many intermediate working steps that, in tyres made in accordance with the known art, were executed for obtaining the carcass plies and other different workpieces to be assembled in the subsequent tyre-manufacturing steps.

In conclusion, the tyre structure in accordance with the invention enables the intermediate manufacturing processes to be drastically simplified, so that the whole tyre-manufacturing process can be, for instance, carried out on a single apparatus comprising different carrousel-disposed working stations, as shown in Fig. 6.

It is also to note that in the tyre in question beads are less stressed than in known tyres, also because no function concerning air-tightness relies on them. As a result, reinforcing elements of metal material can be eliminated, at least when the tyre is not of the heavy-duty type, which will be advantageous for recycling of the materials at the end of the useful tyre life.

Under this point of view it is to note that coexistence of metal elements incorporated in the elastomer material has always been a serious problem.

In addition, due to the absence of metal elements, heat supply for the vulcanization step can take place by means of microwaves instead of using steam as in known processes.

This aspect too represents an important advantage for the purpose of simplifying the production plants and in terms of production speed.

However, in the presence of reinforcing elements of metal material, vulcanization can in any case be advantageously carried out in induction furnaces, in which heat transmission takes place by electromagnetic induction through the mould walls.

The construction conception of the tyre in reference and the modalities according to which it is engaged with the respective rim causes the tyre to be in any case efficiently anchored to the rim also in the absence of any outer shoulder, even if the tyre, due to a puncture for example, is obliged to run in the absence of pressure inside it, that is in the condition known by technicians as "flat running". As above described, in fact, beads are fixedly retained between the abutment surfaces 16 of the rim, without any possibility of axial displacements either in the direction of the equatorial median plane, or away therefrom.

Tyre-rim coupling is therefore adapted to enable running in a sufficiently safe manner even when the tyre is completely deflated.

Another advantage achieved by the invention consists in ensuring an excellent structural homogeneity of the tyre carcass, that cannot be found in traditional tyres having an open sectional profile.

In particular, carcass plies do not have any irregularity resulting from partial overlapping of the ply portions that, in accordance with known processes, are consecutively coupled so as to form a carcass ply of the desired circumferential extension. In addition, formation of carcass plies by direct winding of continuous cords round the air tube of toroidal conformation ensures an excellent structural uniformity of the carcass plies themselves.

Another advantage achieved by the present invention is to enable an important reduction-in-weight of the rim, since the presence of outer shoulders is no longer necessary and, above all, also the connecting portion between the opposite side portions of the rim is not required any more, which portion in the known art necessarily needed an uninterrupted extension for achieving airtightness.

It is also to note that coupling between the tyre and rim in accordance with the present invention is capable of greatly facilitating operations for assembling and disassembling the tyre to and from the rim. This is in particular due to the fact that it is not necessary to arrange on the rims, shoulders of important radial extension acting on the tyre beads from the outside. Even in the presence of inner shoulders, the latter can advantageously have very reduced radial sizes as compared with those required when known open-profile tyres are employed. The outer shoulders can be also mounted in a removable manner, by screws or equivalent connecting means.

Another advantage for improvement of a modular production system resides in the possibility of making the belt structure with the tread band as a pre-vulcanized element to be associated with the carcass structure. In addition, the tread band together with the belt can be easily replaced once it is worn out, so that usual operations for tyre recapping are eliminated.

## Claims

1. A method of making a tyre for vehicle wheels, comprising the steps of:
- preparing an inflatable core (3) of toroidal conformation, having a transverse profile in the form of a closed ring;
- covering the inflatable core (3) with a carcass structure (5), accomplishment of which involves winding of at least one first thread-like element (6a) round the transverse profile of the inflatable core (3) so as to form first turns disposed consecutively in side by side relationship along the circumferential extension of the inflatable core to define a first carcass ply (6) integrally covering the inflatable core (3);
- associating a circumferentially inextensible belt structure (12) and a tread band (13) circumferentially external to the belt structure (12), with the carcass structure (5) at a radially outer position,
**characterized in that** if further comprises the steps of:
- shaping said inflatable core (3), into a substantially elliptic conformation seen in a half-section along a plane radial to a rotation axis of the core by inflation to a preestablished pressure before said covering step; and
- maintaining said substantially elliptic configuration of said core (3) by said inflation to a preestablished pressure for at least said covering step.

2. A method as claimed in claim 1, wherein the core (3) preparation step comprises the step of forming portions having a differentiated resistance to pressure, as part of said core (3).

3. A method as claimed in claim 1, wherein said core (3) is pre-vulcanized before said conformation step.

4. A method as claimed in claim 3, wherein said inflatable core (3) is pre-vulcanized until a vulcanization degree at least equal to 50%.

5. A method as claimed in claim 1, wherein said preestablished pressure corresponds to an actual pressure included between 0.01 and 0.2 bar.

6. A method as claimed in claim 1, wherein preparation of the inflatable core (3) involves the following steps:
- injecting an elastomer material into two opposite cavities defined between two respective mould-halves to be moved close to each other and a forming body or former interposed between said mould-halves, to define two halves of said inflatable core;
- removing the former from said mould-halves;
- moving the mould-halves close to each other so as to make said halves fit together at the respective junction end edges;
- pre-vulcanizing the inflatable core (3) within said mould-halves.

7. A method as claimed in claim 1, wherein preparation of the inflatable core (3) involves the following steps:
- introducing a predetermined amount of rubber latex into a cavity of a mould;
- causing rotation of the mould about at least two orthogonal axes so as to homogeneously distribute the rubber latex on the surfaces of said cavity;
- pre-vulcanizing the inflatable core.

8. A method as claimed in claim 1, wherein windinq up of said at least one thread-like element (6a) is carried out by causing rotation of a support reel (6b) carrying the thread-like element about the transverse profile of the inflatable core (3), while the air tube itself is caused to substantially rotate about its own geometric axis of rotation.

9. A method as claimed in claim 8, wherein laying down of said at least one first thread-like element (6a) over the inflatable core (3) takes place at a portion of the inflatable core which is guided between two mutually opposite guide collars (109a).

10. A method as claimed in claim 8, wherein during winding of said at least one first thread-like element (6a), delivery of said thread-like element from the reel (6b) is controlled so as to have a linear extent slightly lower than the outer perimetric extension of the inflatable-core (3) transverse profile, for each turn carried out by the reel (6b) about the inflatable-core transverse profile.

11. A method as claimed in claim 1, wherein winding of said at least one first thread-like element (6a) is preceded by a step of applying a first layer of raw elastomer material to the inflatable core (3).

12. A method as claimed in claim 11, wherein application of said first layer of elastomer material takes place by winding a first ribbon-like element of raw elastomer material round the inflatable-core (3) transverse profile, thereby forming turns disposed after each other in side by side relationship so as to cover the inflatable core itself substantially integrally.

13. A method as claimed in claim 1, wherein said at least one first thread-like element (6a) is incorporated in a layer of raw elastomer material.

14. A method as claimed in claim 1, wherein formation of the carcass structure (5) involves simultaneous winding up of at least two first thread-like elements (6a) disposed parallelly to define a first ribbon-like band.

15. A method as claimed in claim 14, wherein the thread-like elements (6a) forming said first ribbon-like band are previously incorporated into a layer of raw elastomer material joining them together before the winding step.

16. A method as claimed in claim 1, wherein winding up of at least one first thread-like element (6a) takes place at a tension equal to or lower than 2% in terms of elongation.

17. A method as claimed in claim 1, wherein accomplishment of the carcass structure (5) further involves application of a pair of annular anchoring elements (7) to the first carcass ply (6), said anchoring elements (7) being spaced apart from each other and extending circumferentially at a radially inner position relative to the inflatable core (3).

18. A method as claimed in claim 17, wherein application of said annular anchoring elements (7) is carried out by axially moving the latter towards the inflatable core (3).

19. A method as claimed in claim 18, wherein said axial-approaching step is followed by a further rolling step of the annular anchoring elements (7).

20. A method as claimed in claim 17, wherein application of the annular anchoring elements (7) is preceded by a winding step of at least one second ribbon-like element of raw elastomer material about the transverse profile of the inflatable core (3), creating turns disposed after each other in side by side relationship so as to form a second elastomer layer covering the first carcass ply (6) substantially integrally.

21. A method as claimed in claim 17, wherein application of the annular anchoring elements (7) takes place concurrently with closure of the carcass structure (5) into a vulcanization mould within which the annular anchoring elements are arranged.

22. A method as claimed in claim 21, wherein said annular anchoring elements (7) are made by injection of elastomer material into respective cavities defined within the vulcanization mould.

23. A method as claimed in claim 17, wherein said annular anchoring elements (7) are made of an injection-moulded elastomer material.

24. A method as claimed in claim 17, wherein each annular anchoring element (7) is obtained by extrusion.

25. A method as claimed in claim 17, further comprising the step of incorporating at least one circumferentially-inextensible annular reinforcing insert (9) into each of said annular anchoring elements (7).

26. A method as claimed in claim 25, wherein said annular reinforcing insert (9) is incorporated into the respective annular anchoring element (7) during the manufacturing step of said anchoring element which is made of an injection-moulded elastomer material.

27. A method as claimed in claim 25, wherein each of said annular reinforcing inserts (9) is incorporated into the respective annular anchoring element (7) by fitting through a cut arranged in the annular anchoring element.

28. A method as claimed in claim 17, wherein said annular anchoring elements (7) are pre-vulcanized before being utilized for making said tyre.

29. A method as claimed in claim 17, wherein manufacture of the carcass structure (5) further involves application of a holding and reinforcing textile structure (11) to an outer surface of each of said annular anchoring elements (7).

30. A method as claimed in claim 29, wherein said holding and reinforcing textile structure (11) comprises at least one ribbon-like band applied to the respective annular 'anchoring element (7) before application of the latter to the first carcass ply (6).

31. A method as claimed in claim 29, wherein said holding and reinforcing textile structure (11) is applied to the annular anchoring elements (7) subsequently to their being applied to the first carcass ply (6).

32. A method as claimed in claim 31, wherein said holding and reinforcing textile structure is preferably made by winding at least one second thread-like element round the transverse profile of the inflatable core (3) to form turns disposed consecutively in side by side relationship along the whole circumferential extension of the inflatable core, in order to define a second carcass ply (11) superposed on the first carcass ply (6).

33. A method as claimed in claim 32, wherein winding up of the second thread-like element is preceded by a step involving covering of same with a layer of raw elastomer material.

34. A method as claimed in claim 32, wherein formation of the second carcass ply (11) involves a simultaneous winding of at least two of said second thread-like elements disposed parallelly in side by side relationship so as to form a ribbon-like band.

35. A method as claimed in claim 34, wherein the thread-like elements forming the second ribbon-like band are incorporated in a layer of raw elastomer material joining them together before their winding step.

36. A method as claimed in claim 32, further comprising a circumferential cutting step of the second carcass ply (11) at a radially internal region relative to the inflatable core (3) and included between said annular anchoring elements (7).

37. A method as claimed in claim 36, further comprising a step of conveniently shaping the cut flaps of the second carcass ply (11) to make them adhere to the surfaces of the anchoring elements (7) and the first carcass ply (6).

38. A method as claimed in claim 1, further comprising a step of applying protection elements (15, 15a) of elastomer material to the outer surfaces of the carcass structure (5).

39. A method as claimed in claim 38, wherein application of these protection elements (15, 15a) of elastomer material is carried out by closure of the carcass structure (5) inside a vulcanization mould (133) within which the protection elements are arranged.

40. A method as claimed in claim 39, wherein said protection elements (15, 15a) are obtained by injection of elastomer material into respective cavities defined within said vulcanization mould (133).

41. A method as claimed in claim 1, wherein manufacture of the belt structure (12) and tread band (13) involves the following steps:
- circumferentially applying at least one belt strip to a support drum (121);
- circumferentially applying a tread band (113) of raw elastomer material to said at least one belt strip, so that said belt structure and tread band form an annular element to be coupled with said carcass strip (5).

42. A method as claimed in claim 41, wherein said tread band (13) is made by spiralling at least one continuous elongated element of elastomer material about the belt structure, so as to form turns disposed consecutively in side by side relationship.

43. A method as claimed in claim 41, further comprising the step of arranging a sleeve (12a) of raw elastomer material on the support drum (121) before application of said at least one belt strip.

44. A method as claimed in claim 41, wherein said annular element (12, 13) and carcass structure (5) are vulcanized separately from each other and mutually coupled in a removable manner.

45. A method as claimed in claim 44, further comprising the steps of:
- forming at least one circumferential hump (14) at a radially outer position on the carcass structure (5), before vulcanization of said carcass structure;
- defining at least one anchoring seating conforming in shape to said circumferential hump (14) in the belt structure (12), before vulcanization of the latter.

46. A method as claimed in claim 45, wherein said circumferential hump (14) is made by circumferential winding of at least one ribbon-like element round the carcass structure (5).

47. A method as claimed in claim 41, wherein said annular element (12, 13) and carcass structure (5) are vulcanized simultaneously after their mutual coupling.

48. A method as claimed in claim 1, further comprising a vulcanization step of at least said carcass structure (5) in a vulcanization mould (133), wherein during vulcanization the carcass is inflated by admission of a fluid under pressure to the inflatable core (3).

49. A method as claimed in claim 48, wherein the carcass (5) is maintained to an inflated condition during a cooling step carried out after said vulcanization step.

50. A method as claimed in claim 48, wherein vulcanization is carried out through heat supply by microwaves.

51. A method as claimed in claim 48, wherein vulcanization is carried out through heating of the mould walls by electromagnetic induction.

52. A method as claimed in claim 1, wherein manufacture of said belt structure (12) involves winding up of at least one belt strip (12a) directly about the carcass structure (5).

## Patentansprüche

1. Verfahren zur Herstellung eines Reifens für Fahrzeugräder, umfassend die Arbeitsschritte:
- Herstellen eines aufblasbaren Schlauches (3) torusförmiger Ausbildung mit zu einem Ring geschlossenen Querprofil;
- Überziehen des aufblasbaren Schlauches (3) mit einem Unterbau (5), dessen Ausführung das Aufwickeln mindestens eines ersten, fadenförmigen Elementes (6a) um das Querprofil der aufblasbaren Seele (3) herum zur Bildung von ersten, nacheinander anliegenden Windungen längs der Umfangsabwicklung der aufblasbaren Seele selbst vorsieht, um eine erste Unterbaulage (6) festzulegen, die vollständig den aufblasbaren Schlauch (3) überzieht;
- Zuordnen dem Unterbau (5) in einer radial äußeren Position eines in Umfangsrichtung nicht dehnbaren Gürtelaufbaues (12) und einer in Umfangsrichtung zum Gürtelaufbau (12) äußeren Lauffläche (13),
**dadurch gekennzeichnet, dass** es überdies folgende Arbeitsschritte umfasst:
- Ausbilden des aufblasbaren Schlauches (3) in einer im Halbschnitt längs einer zur Drehachse des Schlauches radialen Ebene gesehenen, im wesentlichen elliptischen Ausbildung bis zu einem vorgegebenen Druck vor dem Arbeitsschritt des Überziehens;
- Aufrechterhalten der im wesentlichen elliptischen Ausbildung des Schlauches (3) durch Füllen bis zu einem vorgegebenen Druck für mindestens den Schritt des Überziehens.

2. Verfahren nach Anspruch 1, bei dem der Arbeitsschritt des Herstellens des Schlauches (3) den Arbeitschritt des Bildens von Abschnitten mit gegenüber dem Druck differenzierten Widerstand (3a) als Teil des Schlauches (3) umfasst.

3. Verfahren nach Anspruch 1, bei dem der Schlauch (3) vor dem Arbeitsschritt des Ausbildens vorvulkanisiert wird.

4. Verfahren nach Anspruch 3, bei dem der aufblasbare Schlauch (3) bis zu einem Vulkanisierungsgrad von mindestens gleich 50% vorvulkanisiert wird.

5. Verfahren nach Anspruch 1, bei dem der vorgegebenen Druck einem effektiven Druck zwischen 0,01 und 02 bar entspricht.

6. Verfahren nach Anspruch 1, bei dem das Herstellen des aufblasbaren Schlauches (3) die folgenden Arbeitsschritte vorsieht:
- Spritzgießen eines Elastomers in zwei gegenüberliegende Hohlräume, die jeweils durch zwei gegenseitig ansetzbare Formhälften und einen Formkörper festgelegt sind, der zwischen den zwei Formhälften liegt, um die beiden Teilehälften des aufblasbaren Schlauches festzulegen;
- Entfernen des Formkörpers aus den Formhälften;
- gegenseitiges Ansetzen der Formhälften, indem die genannten Teilehälften gegenseitig im Bereich der entsprechenden, endseitigen Verbindungsränder aneinander gepresst werden;
- Vorvulkanisieren des aufblasbaren Schlauches (3) innerhalb der Formhälften.

7. Verfahren nach Anspruch 1, bei dem das Herstellen des aufblasbaren Schlauches (3) folgende Arbeitsschritte umfasst:
- Einführen einer vorgegebenen Menge von Gummilatex in einen Hohlraum einer Form;
- Drehen der Form um mindestens zwei senkrechte Achsen, um den Gummilatex auf den Hohlraumoberflächen gleichförmig zu verteilen;
- Vorvulkanisieren des aufblasbaren Schlauches (3).

8. Verfahren nach Anspruch 1, bei dem das Aufwickeln mindestens eines ersten fadenförmigen Elementes (6a) durchgeführt wird, indem um das Querprofil des aufblasbaren Schlauches (3) eine Tragspule (6b) des kragenförmigen Elementes selbst gedreht wird, während die Luftkammer selbst im wesentlichen um die eigene geometrische Drehachse gedreht wird.

9. Verfahren nach Anspruch 8, bei dem die Ablage mindestens eines ersten, fadenförmigen Elementes (6a) auf der aufblasbaren Seele (3) im Bereich eines Abschnittes dieser letzteren, geführt zwischen zwei gegenseitig gegenüberliegenden Führungskrägen (109a) erfolgt.

10. Verfahren nach Anspruch 8, bei dem während des Aufwickelns mindestens eines ersten fadenförmigen Elementes (6a), der Abzug des fadenförmigen Elementes selbst von der Spule (6b) gemäß einem linearen Maß leicht unterhalb der äußeren Umfangsabwicklung des Querprofils des aufblasbaren Schlauches (3) bei jeder Volldrehung der Spule (6b) um das Querprofil des aufblasbaren Schlauches (3) herum gesteuert wird.

11. Verfah nach Anspruch 1, bei dem das Aufwickeln mindestens eines fadenförmigen Elementes nach einem Arbeitsschritt zur Anbringung einer rohen Elastomerschicht auf der aufblasbaren Seele (3) erfolgt.

12. Verfahren nach Anspruch 11, bei dem das Anbringen der ersten Elastomerschicht durch Aufwickeln eines ersten bandförmigen Elementes aus rohem Elastomer um das Querprofil der aufblasbaren Seele (3) herum gemäß nacheinander anliegenden Windungen zum im wesentlichen völligen Überziehen des aufblasbaren Schlauches Seele selbst erfolgt.

13. Verfahren nach Anspruch 1, bei dem mindestens ein erstes fadenförmiges Element (6a) in einer rohen Elastomerschicht eingebettet ist.

14. Verfahren nach Anspruch 1, bei dem das Bilden des Unterbaues (5) das simultane Aufwickeln mindestens zweier ersten, fadenförmiger Elemente (6a) vorsieht, die parallel angeordnet sind, um einen ersten bandförmigen Streifen festzulegen.

15. Verfahren nach Anspruch 14, bei dem die, den ersten bandförmigen Streifen ausbildenden bandförmigen Elemente (6a) zuvor in eine rohe Elastomerschicht eingebettet werden, die sie gegenseitig vor dem Arbeitsschritt des Aufwickelns vereint.

16. Verfahren nach Anspruch 1, bei dem das Aufwickeln mindestens eines fadenförmigen Elementes (6a) gemäß einer Spannung gleich oder unterhalb von 2% im Ausmaß einer Dehnung erfolgt.

17. Verfahren nach Anspruch 1, bei dem die Herstellung des Unterbaus (5) überdies das Anbringen auf der ersten Unterbaulage (6) eines Paars von ringförmigen Verankerungselementen (7) vorsieht, die voneinander axial beabstandet sind und sich in Umfangsrichtung in einer zur aufblasbaren Seele (3) radial inneren Position erstrecken.

18. Verfahren nach Anspruch 17, bei dem das Anbringen der ringförmigen Verankerungselemente (7) durch axialen Annähern derselben zum aufblasbaren Schlauch (3) durchgeführt wird.

19. Verfahre nach Anspruch 18, bei dem dem Arbeitsschritt des axialen Annäherns ein Arbeitsschritt des Rollens der ringförmigen Verankerungselemente (7) folgt.

20. Verfahren nach Anspruch 17, bei dem dem Anbringen der ringförmigen Verankerungselemente (7) ein Arbeitsschritt des Aufwickelns mindestens eines zweiten, bandförmigen Elementes aus rohem Elastomer um das Querprofil (3) gemäß Windungen vorangeht, die nacheinander zum Anliegen kommen, um eine zweite Elastomerschicht zu bilden, die im wesentlichen vollständig die erste Unterbaulage (6) überzieht.

21. Verfahren nach Anspruch 17, bei dem das Anbringen der ringförmigen Verankerungselemente (7) zusammen mit dem Schließen des Unterbaus (5) in einer Vulkanisierungsform erfolgt, in der die ringförmigen Verankerungselemente selbst bereitgestellt sind.

22. Verfahren nach Anspruch 21, bei dem die ringförmigen Verankerungselemente (7) durch Spritzgießen eines Elastomers in entsprechende Hohlräume erhalten werden, die innerhalb der Vulkanisierungsform festgelegt sind.

23. Verfahren nach Anspruch 17, bei dem die ringförmigen Verankerungselemente (7) aus spritzgegossenem Elastomer ausgeführt sind.

24. Verfahren nach Anspruch 17, bei dem jedes ringförmige Verankerungselement (7) durch Ziehen erhalten wird.

25. Verfahren nach Anspruch 17, umfassend überdies den Arbeitsschritt mindestens eines ringförmigen, umfangsmäßig nicht dehnbaren Verstärkungseinsatz (9) in jedes der ringförmigen Verankerungselemente (7) einzubetten.

26. Verfahren nach Anspruch 25, bei dem der ringförmige Verstärkungseinsatz (9) in das jeweilige, ringförmige Verankerungselement (7) beim Arbeitsschritt der Herstellung desselben eingebettet wird, wobei dieses letztere aus spritzgegossenem Material besteht.

27. Verfahren nach Anspruch 25, bei dem jedes der ringförmigen Verstärkungseinsätze (9) in das jeweilige, ringförmige Verankerungselement (7) durch Einbringen über eine Kerbe eingebettet wird, die im ringförmigen Verankerungselement selbst bereitgestellt ist.

28. Verfahren nach Anspruch 17, bei dem die ringförmigen Verankerungselemente (7) vorvulkanisiert werden, bevor sie bei der Herstellung des Reifens verwendet werden.

29. Verfahren nach Anspruch 17, bei dem das Herstellen des Unterbaus (5) überdies das Anbringen eines textilen Halte- und Verstärkungsaufbaues (11) auf einer Außenfläche eines jeden der ringförmigen Verankerungselemente (7) vorsieht.

30. Verfahren nach Anspruch 29, bei dem der textile Halte- und Verstärkungsaufbau (11) mindestens einen bandförmigen Streifen umfasst, der am entsprechenden ringförmigen Verankerungselement (7) vor dem Anbringen dieses letzteren auf der ersten Unterbaulage (6) angebracht wird.

31. Verfahren nach Anspruch 29, bei dem der textile Halte- und Verstärkungsaufbau (11) auf den ringförmigen Verankerungselementen (7) nach ihrem Anbringen auf der ersten Unterbaulage (6) angebracht wird.

32. Verfahren nach Anspruch 31, bei dem der textile Halte- und Verstärkungsaufbau (11) ausgeführt wird, indem mindestens ein zweites fadenförmiges Element um das Querprofil des aufblasbaren Schlauches (3) herum gemäß Windungen aufgewickelt wird, die nacheinander aneinanderliegend längs der gesamten Umfangsabwicklung des aufblasbaren Schlauches selbst zur Festlegung einer zweiten Unterbaulage (11) aufgewickelt wird, welche die erste Unterbaulage (6) überlappt.

33. Verfahren nach Anspruch 32, bei dem dem Aufwickeln des zweiten fadenförmigen Elementes das Überziehen desselben mit einer rohen Elastomerschicht vorangeht.

34. Verfahren nach Anspruch 32, bei dem das Bilden der zweiten Unterbaulage (11) das simultane Aufwickeln mindestens zwei der zweiten fadenförmigen, parallel anliegenden Elemente zur Bildung eines bandförmigen Streifens vorsieht.

35. Verfahren nach Anspruch 34, bei dem die, den zweiten bandförmigen Streifen ausbildenden Elemente, in eine rohe Elastomerschicht eingebaut werden, die sie gegenseitig vor ihrem Arbeitsschritt des Rufwickelns vereint.

36. Verfahren nach Anspruch 32, umfassen überdies einen Arbeitsschritt eines umfangsmäßigen Schneidens der zweiten Unterbaulage (11) in einen zum aufblasbaren Schlauch (3) radialen inneren Zone, die zwischen den ringförmigen Verankerungselementen (7) liegt.

37. Verfahren nach Anspruch 1, umfassend überdies einen Arbeitsschritt der Ausbildung von geschnittenen Lappen der zweiten Unterbaulage (11) um sie auf den Oberflächen der Verankerungselemente (7) und der ersten Unterbaulage (6) zum Anliegen zu bringen.

38. Verfahren nach Anspruch 1, umfassend überdies einen Arbeitsschritt des Anbringens von Schutzelementen (15, 15a) aus Elastomer auf den Außenflächen des Unterbaus (5).

39. Verfahren nach Anspruch 38, bei dem das Anbringen der Schutzelemente (15, 15a) aus Elastomer durch Schließen des Unterbaus (5) in einer Vulkanisierungsform (133) durchgeführt wird, in der die Schutzelemente selbst bereitgestellt sind.

40. Verfahren nach Anspruch 39, bei dem die Schutzelemente (15, 15a) durch Spritzgießen von Elastomer in jeweilige Hohlräume erhalten werden, die innerhalb der Vulkanisierungsform (133) festgelegt sind.

41. Verfahren nach Anspruch 1, bei dem die Herstellung des Gürtelaufbaus (12) und der Lauffläche (13) die folgenden Arbeitsschritte vorsieht:
- Anbringen am Umfang mindestens eines Gürtelstreifens um eine Tragtrommel (121);
- Anbringen am Umfang mindestens eines Gürtelstreifens einer Lauffläche (113) aus rohem Elastomer, wodurch der Gürtelaufbau und die Lauffläche ein ringförmiges Element bilden, um mit dem Unterbau (5) verbunden zu werden.

42. Verfahren nach Anspruch 41, bei dem die Lauffläche (13) durch Aufwinden für nacheinanderfolgende, aneinanderliegende Windungen mindestens eines länglichen Elementstranges aus Elastomer um den Gürtelaufbau (12) herum ausgeführt wird.

43. Verfahren nach Anspruch 41, umfassend überdies den Arbeitsschritt des Bereitstellens einer Muffe (12a) aus rohem Elastomer auf der Tragtrommel (121) vor dem Anbringen des mindestens einen Gürtelstreifens.

44. Verfahren nach Anspruch 41, bei dem das ringförmige Element (12, 13) und der Unterbau (5) voneinander getrennt und gegenseitig abnehmbar gekoppelt vulkanisiert werden.

45. Verfahren nach Anspruch 44, umfassend überdies die Arbeitsschritte:
- Bilden mindestens einer Umfangsnase (14) in einer radialen äußeren Position auf dem Unterbau (5), vor der Vulkanisation desselben;
- Festlegen im Gürtelaufbau (12), vor der Vulkanisation desselben, mindestens einer Verankerungsaufnahme, die zur Umfangsnase (14) gegenprofiliert ist.

46. Verfahren nach Anspruch 45, bei dem die Umfangsnase (14) durch Aufwickeln mindestens eines bandförmigen Elementes in Umfangsrichtung um den Unterbau (5) herum hergestellt wird.

47. Verfahren nach Anspruch 41, bei dem das ringförmige Element (12, 13) und der Unterbau (5) simultan nach ihrer gegenseitigen Verbindung vulkanisiert werden.

48. Verfahren nach Anspruch 1, umfassend überdies einen Arbeitsschritt des Vulkanisierens mindestens eines Unterbaus (5) in einer Vulkanisierungsform (133), in der während der Vulkanisation der Unterbau durch Einbringen eines Druckmittels in die aufblasbare Seele (3) aufgeblasen wird.

49. Verfahren nach Anspruch 48, bei dem der Unterbau (5) während eines Arbeitsschrittes des Abkühlens nach dem Arbeitsschritt des Vulkanisierens im Füllzustand erhalten bleibt.

50. Verfahren nach Anspruch 48, bei dem das Vulkanisieren durch Wärmezufuhr über Mikrowellen erfolgt.

51. Verfahren nach Anspruch 48, bei dem das Vulkanisieren durch Erhitzen der Formwände durch elektromagnetische Induktion durchgeführt wird.

52. Verfahren nach Anspruch 1, bei dem die Herstellung des Gürtelaufbaues (12) das Aufwickeln mindestens eines Gürtelstreifens (12a) unmittelbar um den Unterbau (5) herum vorsieht.

## Revendications

1. Procédé pour la fabrication d'un bandage pneumatique pour roues de véhicules, comprenant les étapes suivantes:
- préparation d'une âme gonflable (3) de conformation toroïdale, ayant un profil transversal en forme de bague fermée;
- revêtement de l'âme gonflable (3) avec une structure de carcasse (5), dont la réalisation implique l'enroulement d'au moins un premier élément filiforme (6a) autour du profil transversal de l'âme gonflable (3) de manière à former des premières spires disposées consécutivement côte à côte le long de l'extension circonférentielle de l'âme gonflable à définir une première toile de carcasse (6) recouvrant l'âme gonflable (3) intégralement;
- combinaison d'une structure de ceinture inextensible en sens circonférentiel (12) et d'une bande de roulement (13) disposée sur la circonférence extérieure de la structure de ceinture (12), avec la structure de carcasse (5) à une position radiale externe,
**caractérisé en ce qu'**il comporte en outre les étapes de:
- façonner ladite âme gonflable (3) selon une conformation sensiblement elliptique vue en demi-coupe le long d'un plan radial à l'axe de rotation de l'âme, par gonflage à une pression prédéterminée avant ladite étape de revêtement; et
- maintenir ladite conformation sensiblement elliptique de ladite âme (3) par ledit gonflage à une pression prédéterminée pendant au moins ladite étape de revêtement.

2. Procédé selon la revendication 1, dans lequel l'étape de préparation de l'âme comprend l'étape de former des portions ayant une résistance différenciée à la pression, comme partie de ladite âme (3).

3. Procédé selon la revendication 1, dans lequel ladite âme (3) est pré-vulcanisée avant ladite étape de conformation.

4. Procédé selon la revendication 3, dans lequel ladite âme gonflable (3) est pré-vulcanisée jusqu'à un degré de vulcanisation au moins égal à 50%.

5. Procédé selon la revendication 1, dans lequel ladite pression prédéterminée correspond à une pression réelle comprise entre 0,01 et 0,2 bar.

6. Procédé selon la revendication 1, dans lequel la préparation de l'âme gonflable (3) implique les étapes suivantes:
- injection d'une matière élastomère dans deux cavités opposées définies entre deux demi-moules respectifs à rapprocher l'un de l'autre et un corps de formage interposé entre lesdits demi-moules, à définir deux moitiés de ladite âme gonflable;
- rapprocher l'un de l'autre les demi-moules de manière que lesdites moitiés s'adaptent réciproquement à des bords de jonction terminaux respectifs;
- pré-vulcaniser l'âme gonflable (3) dans lesdits demi-moules.

7. Procédé selon la revendication 1, dans lequel la préparation de l'âme gonflable (3) implique les étapes suivantes:
- introduction d'une quantité prédéterminée de latex de caoutchouc dans une cavité d'un moule;
- rotation du moule autour d'au moins deux axes orthogonaux de manière à distribuer d'une façon homogène le latex de caoutchouc sur les surfaces de ladite cavité;
- pré-vulcanisation de l'âme gonflable.

8. Procédé selon la revendication 1, dans lequel l'enroulement dudit au moins un élément filiforme (6a) est effectué faisant tourner autour du profil transversal de l'âme gonflable (3) une bobine support (6b) portant l'élément filiforme, pendant que la chambre à air est tournée essentiellement autour de son propre axe géométrique de rotation.

9. Procédé selon la revendication 8, dans lequel le dépôt dudit au moins un premier élément filiforme (6a) sur l'âme gonflable (3) a lieu à l'emplacement d'une portion de l'âme gonflable qui est guidée entre deux colliers de guidage réciproquement opposés (109a).

10. Procédé selon la revendication 8, dans lequel pendant l'enroulement dudit au moins un premier élément filiforme (6a), l'alimentation dudit élément filiforme de la bobine (6b) est contrôlée de manière à avoir une extension linéaire légèrement inférieure à l'extension périmétrale extérieure du profil transversal de l'âme gonflable (3), par chaque tour effectué par la bobine (6b) autour du profil transversal de l'âme gonflable.

11. Procédé selon la revendication 1, dans lequel l'enroulement dudit au moins un premier élément filiforme (6a) est précédé d'une étape prévoyant l'application d'une première couche de matière élastomère brute sur l'âme gonflable (3).

12. Procédé selon la revendication 11, dans lequel l'application de ladite première couche de matière élastomère a lieu par enroulement d'un premier élément rubané de matière élastomère brute autour du profil transversal de l'âme gonflable (3), de manière à former des spires disposées côte à côte les unes après les autres en vue de recouvrir l'âme gonflable essentiellement intégralement.

13. Procédé selon la revendication 1, dans lequel ledit au moins un premier élément filiforme (6a) est incorporé dans une couche de matière élastomère brute.

14. Procédé selon la revendication 1, dans lequel la formation de la structure de carcasse (5) prévoit l'enroulement simultané d'au moins deux premiers éléments filiformes (6a) disposés parallèles à définir une première bande rubanée.

15. Procédé selon la revendication 14, dans lequel les éléments filiformes (6a) formant ladite bande rubanée sont précédemment incorporés dans une couche de matière élastomère brute les joignant réciproquement avant l'étape d'enroulement.

16. Procédé selon la revendication 1, dans lequel l'enroulement d'au moins un premier élément filiforme (6a) a lieu à une tension égale ou inférieure à 2% en ce qui concerne l'allongement.

17. Procédé selon la revendication 1, dans lequel la réalisation de la structure de carcasse (5) comporte en outre l'application d'une paire d'éléments d'ancrage annulaires (7) sur la première toile de carcasse (6), lesdits éléments d'ancrage (7) étant espacés l'un de l'autre et s'étendant en sens circonférentiel à une position radiale interne par rapport à l'âme gonflable (3).

18. Procédé selon la revendication 17, dans lequel l'application desdits éléments d'ancrage annulaires (7) est effectuée par le rapprochement axial de ces derniers de l'âme gonflable (3).

19. Procédé selon la revendication 18, dans lequel ladite étape de rapprochement axial est suivie d'une étape de roulage des éléments d'ancrage annulaires (7).

20. Procédé selon la revendication 17, dans lequel l'application des éléments d'ancrage annulaires (7) est précédée d'une étape d'enroulement d'au moins un deuxième élément rubané de matière élastomère brute autour du profil transversal de l'âme gonflable (3), créant des spires disposées côte à côte les unes après les autres de manière à former une deuxième couche élastomère recouvrant sensiblement intégralement la première toile de carcasse (6).

21. Procédé selon la revendication 17, dans lequel l'application d'éléments d'ancrage annulaires (7) a lieu simultanément à la fermeture de la structure de carcasse (5) dans un moule de vulcanisation dans lequel sont arrangés les éléments d'ancrage annulaires.

22. Procédé selon la revendication 21, dans lequel lesdits éléments d'ancrage annulaires (7) sont réalisés par injection de matière élastomère dans des cavités respectives définies dans le moule de vulcanisation.

23. Procédé selon la revendication 17, dans lequel lesdits éléments d'ancrage annulaires (7) sont réalisés en matière élastomère moulée par injection.

24. Procédé selon la revendication 17, dans lequel chaque élément d'ancrage annulaire (7) est obtenu par extrusion.

25. Procédé selon la revendication 17, comprenant en outre l'étape d'incorporer dans chaque élément d'ancrage annulaire (7) au moins une pièce annulaire insérée de renforcement, inextensible en sens circonférentiel (9).

26. Procédé selon la revendication 25, dans lequel ladite pièce annulaire insérée de renforcement (9) est incorporée dans l'élément d'ancrage annulaire respectif (7) pendant l'étape de fabrication dudit élément d'ancrage qui est réalisé en matière élastomère moulée par injection.

27. Procédé selon la revendication 25, dans lequel chacune desdites pièces annulaires insérées de renforcement (9) est incorporée dans l'élément d'ancrage annulaire respectif (7) par insertion à travers une entaille ménagée dans l'élément d'ancrage annulaire.

28. Procédé selon la revendication 17, dans lequel lesdits éléments d'ancrage annulaires (7) sont pré-vulcanisés avant leur utilisation pour la réalisation dudit bandage pneumatique.

29. Procédé selon la revendication 17, dans lequel la fabrication de la structure de carcasse (5) comporte en outre l'application d'une structure textile de contention et de renforcement (11) sur une surface extérieure de chacun desdits éléments d'ancrage annulaires (7).

30. Procédé selon la revendication 29, dans lequel ladite structure textile de contention et de renforcement (11) comporte au moins une bande rubanée appliquée à l'élément d'ancrage annulaire respectif (7) avant l'application de ce dernier sur la première toile de carcasse (6).

31. Procédé selon la revendication 29, dans lequel ladite structure textile de contention et de renforcement (11) est appliquée sur les éléments d'ancrage annulaires (7) après l'application de ces derniers sur la première toile de carcasse (6).

32. Procédé selon la revendication 31, dans lequel ladite structure textile de contention et de renforcement (11) est de préférence réalisée par enroulement d'au moins un deuxième élément filiforme autour du profil transversal de l'âme gonflable (3) à former des spires disposées consécutivement côte à côte le long de toute l'extension circonférentielle de l'âme gonflable, dans le but de définir une deuxième toile de carcasse (11) placée au-dessus de la première toile de carcasse (6).

33. Procédé selon la revendication 32, dans lequel l'enroulement du deuxième élément filiforme est précédé d'une étape prévoyant le revêtement de ce dernier par une couche de matière élastomère brute.

34. Procédé selon la revendication 32, dans lequel la formation de la deuxième toile de carcasse (11) implique l'enroulement simultané d'au moins deux desdits deuxièmes éléments filiformes disposés parallèlement côte à côte de manière à former une bande rubanée.

35. Procédé selon la revendication 34, dans lequel les éléments filiformes formant la deuxième bande rubanée sont incorporés dans une couche de matière élastomère brute les joignant réciproquement avant l'étape prévoyant leur enroulement.

36. Procédé selon la revendication 32, comprenant en outre une étape de coupage circonférentiel de la deuxième toile de carcasse (11) à une zone interne en sens radial par rapport à l'âme gonflable (3) et comprise entre lesdits éléments d'ancrage annulaires (7).

37. Procédé selon la revendication 36, comprenant en outre une étape de conformation des rabats découpés de la deuxième toile de carcasse (11) pour les faire adhérer aux surfaces des éléments d'ancrage (7) et de la première toile de carcasse (6).

38. Procédé selon la revendication 1, comprenant en outre une étape d'application d'éléments de protection (15, 15a) de matière élastomère sur les surfaces extérieures de la structure de carcasse (5).

39. Procédé selon la revendication 38, dans lequel l'application de ces éléments de protection (15, 15a) de matière élastomère est effectuée en renfermant la structure de carcasse (5) dans un moule de vulcanisation (133) à l'intérieur duquel sont arrangés les éléments de protection.

40. Procédé selon la revendication 39, dans lequel lesdits éléments de protection (15, 15a) sont obtenus par injection de matière élastomère dans des cavités respectives définies dans ledit moule de vulcanisation (133).

41. Procédé selon la revendication 1, dans lequel la fabrication de la structure de ceinture (12) et de la bande de roulement (13) prévoit les étapes suivantes:
- application en sens circonférentiel d'au moins une bande de ceinture autour d'un cylindre de support (121);
- application en sens circonférentiel, autour de ladite au moins une bande de ceinture, d'une bande de roulement (113) de matière élastomère brute, de sorte que lesdites structure de ceinture et bande de roulement forment un élément annulaire à accoupler à ladite structure de carcasse (5).

42. Procédé selon la revendication 41, dans lequel ladite bande de roulement (13) est fabriquée par enroulement en spirale d'au moins un élément allongé continu de matière élastomère autour de la structure de ceinture, de manière à former des spires disposées consécutivement côte à côte.

43. Procédé selon la revendication 41, comprenant l'étape d'arranger un manchon (12a) de matière élastomère brute sur le cylindre de support (121) avant l'application de ladite au moins une bande de ceinture.

44. Procédé selon la revendication 41, dans lequel lesdits élément annulaire (12, 13) et structure de carcasse (5) sont vulcanisés séparément l'un de l'autre et accouplés réciproquement de manière amovible.

45. Procédé selon la revendication 44, comprenant en outre les étapes de:
- former au moins un bossage circonférentiel (14) à une position externe en sens radial sur la structure de carcasse (5), avant la vulcanisation de ladite structure de carcasse;
- définir dans la structure de ceinture (12), avant la vulcanisation de cette dernière, au moins un siège d'ancrage épousant la forme dudit bossage circonférentiel (14).

46. Procédé selon la revendication 45, dans lequel ledit bossage circonférentiel (14) est réalisé par enroulement d'au moins un élément rubané autour de la structure de carcasse (5).

47. Procédé selon la revendication 41, dans lequel lesdits élément annulaire (12, 13) et structure de carcasse (5) sont vulcanisés simultanément après leur couplage réciproque.

48. Procédé selon la revendication 1, comprenant en outre une étape de vulcanisation d'au moins ladite structure de carcasse (5) dans un moule de vulcanisation (133), dans lequel pendant la vulcanisation il y a le gonflage de la carcasse par introduction d'un fluide sous pression dans l'âme gonflable (3).

49. Procédé selon la revendication 48, dans lequel la carcasse (5) est maintenue en condition gonflée pendant une étape de refroidissement effectuée après ladite étape de vulcanisation.

50. Procédé selon la revendication 48, dans lequel la vulcanisation est effectuée par l'alimentation de chaleur par micro-ondes.

51. Procédé selon la revendication 48, dans lequel la vulcanisation est effectuée par chauffage des parois du moule par induction électromagnétique.

52. Procédé selon la revendication 1, dans lequel la fabrication de ladite structure de ceinture (12) prévoit l'enroulement d'au moins une bande de ceinture (12a) directement autour de la structure de carcasse (5).
